# EUROPEAN PATENT APPLICATION

(11) **EP 2 280 204 A1**
(43) Date of publication of application: **02.02.2011**
(21) Application number: 09425312.7
(22) Date of filing: 31.07.2009
(51) Int. Cl.: F16K 5/06

(54) **Trunnion-mounted ball valve with a flexible valve seat**

(71) Applicant: Valbart S.r.l., 20050 Mezzago (IT)
(72) Inventor: Seveso, Alberto, 20050 Mezzago (Milano) (IT); Ivanescu, Gabriel, 20050 Mezzago (Milano) (IT)
(74) Representative: Marchitelli, Mauro

(57) **Abstract**

A trunnion-mounted ball valve, comprising a valve body (12) wherein a head portion (46) of at least one of said seat rings (36,38) has at least one annular groove (66,68) directed radially with respect to said longitudinal axis (A), wherein a backup ring is housed in said annular groove (66,68) and is associated to an elastic preloading device arranged to apply between the seat ring (36,38) and said backup ring (70,72) elastic forces parallel to said longitudinal axis (A), said elastic preloading device (82) acting in correspondence with two opposite angular sectors (a) of said backup ring (66,68), each of said angular sectors (a) being symmetric with respect to a diametric axis (D1) of said back-up ring (70,72) orthogonal to said axis of rotation (B).

## Description

### Background of the invention

The present invention relates to trunnion-mounted ball valves for pipelines.

In a trunnion-mounted ball valve, the ball is rotatably connected to the valve body so that side loads generated by the fluid pressure acting on the ball is absorbed by bearings. Two independent floating seat rings are free to move along the valve longitudinal axis. The seat rings have respective valve seats which ensure bi-directional tightness of the valve. At low pressure, the seat sealing action is achieved by the trust of springs acting on the seat rings. As the pressure increases, the fluid pressure pushes the seat rings against the ball.

One of the major problems in the design and manufacture of trunnion-mounted ball valves is to ensure the sealing power of both valve seats when the valve is subject to a differential pressure. The most critical condition is when the valve is subjected to a differential pressure equal to the valve's maximum rated pressure. In this condition, the ball deforms under the pressure applied on the pressurised side and the valve seat on the non-pressurised side tends to lose sealing power because of the deformation of the ball.

### Object and summary of the invention

The object of the present invention is to provide a trunnion-mounted ball valve which overcomes the above problem.

In accordance with the present invention, this object is achieved by a trunnion-mounted ball valve according to claim 1.

### Brief description of the drawings

The present invention will now be described with reference to the appended drawings, given purely by way of non-limiting example, wherein:
- figure 1 is an exploded prospective view of a trunnion-mounted ball valve according to the present invention,
- figure 2 is a cross-section taken along the line II-II of figure 1,
- figure 3 is an enlarged view of the detail indicated by the arrow III in figure 2,
- figure 4 is a partially-sectioned perspective view of the seat ring indicated by the arrow IV in figure 2,
- figure 5 is a front view in the direction indicated by the arrow V in figure 4,
- figure 6 is a cross-section taken along the line VI-VI of figure 5, and
- figures 7 and 8 are enlarged views of the details indicated by the arrows VII and VIII in figure 6.

### Description of a preferred embodiment

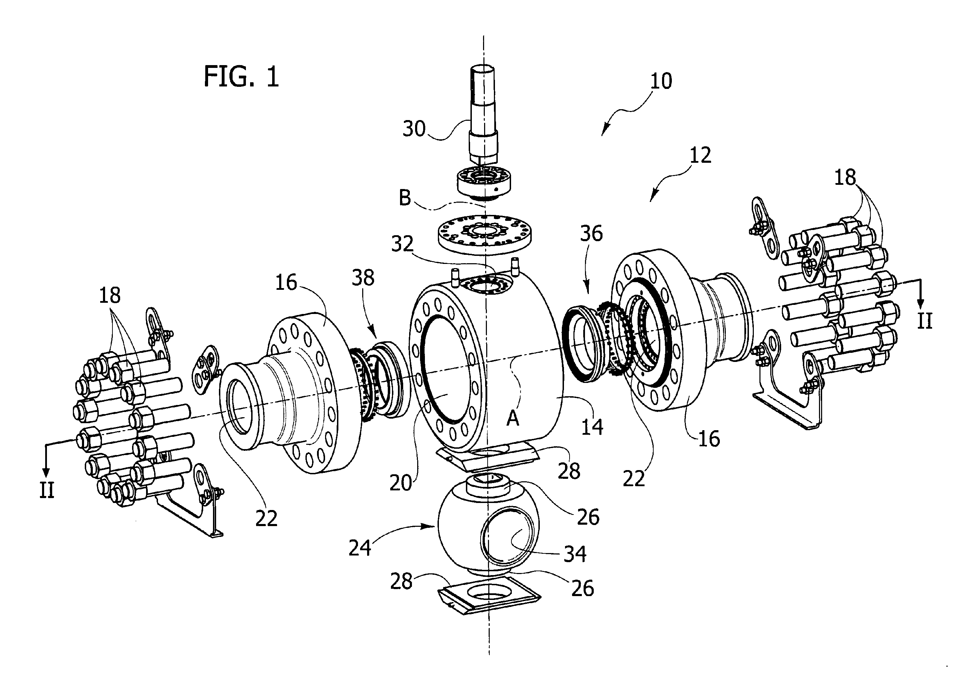

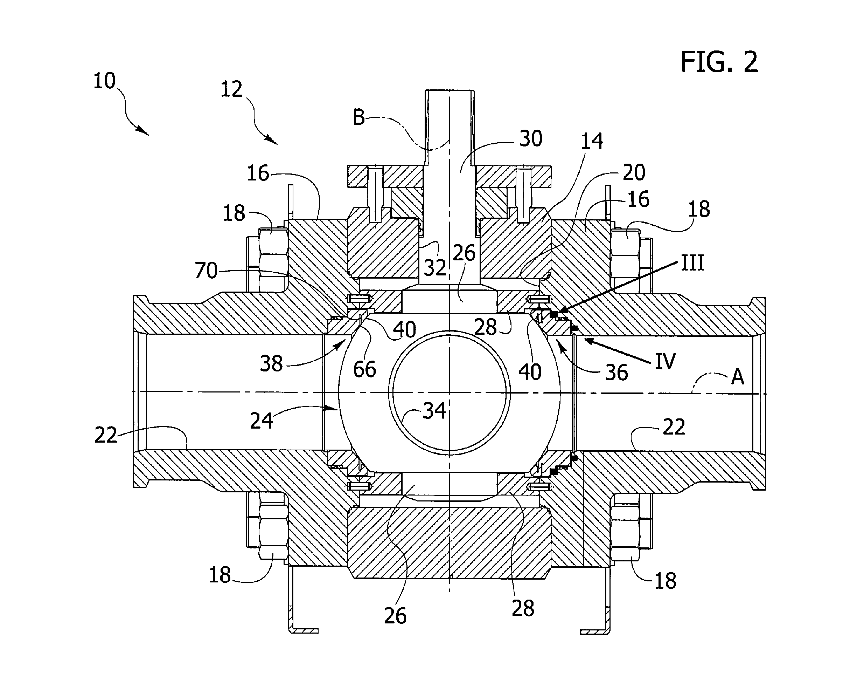

Referring to figure 1 and 2, a trunnion-mounted ball valve according the present invention is indicated by the reference number 10. The valve 10 comprises a valve body 12 including a central body 14 and two tubular sections 16 set on opposite sides of the central body 14 and fixed thereto by means of bolts 18. The central body 14 has a body cavity 20. The tubular sections 16 have respective ducts 22 having a common longitudinal axis A and respective inner ends facing the body cavity 20.

A ball 24 is housed in the body cavity 20 of the central body 14. The ball 24 has two integral trunnions 26 which rotatably engage respective supports 28 fixed to the valve body 12. The ball 24 is rotatable with respect to the valve body 12 about an axis of rotation B which is orthogonal to the longitudinal axis A. A stem 30 extends coaxially to the axis of rotation B through a bore 32 of the central body 14 and is fixed to one of the trunnions 26. The ball 24 has a trough hole 34 having a diameter which is substantially equal to the diameter of the ducts 22. The ball 24 is rotatable about the axis of rotation B between an open position in which the through hole 34 is aligned to the ducts 22 and a closed position wherein the through hole 34 is transversal to the ducts 22.

The valve 10 comprises a first and a second seat ring 36, 38 having respective inner diameters equal to or greater than the diameter of the ducts 22. The seat rings 36, 38 are free to move along the longitudinal axis A and are provided with respective valve seats 40 which abut on opposite sides of the ball 24.

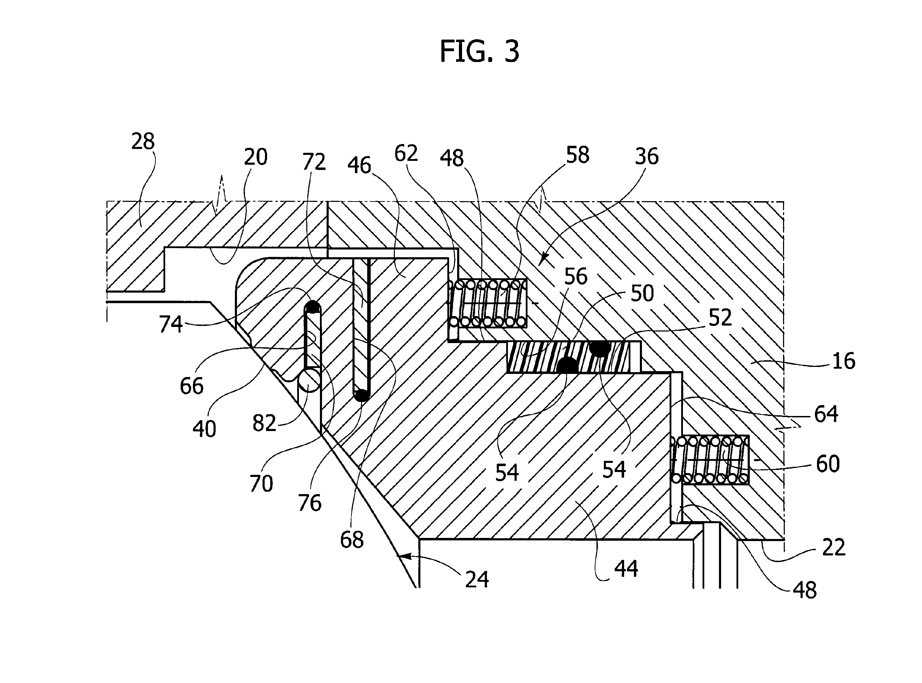

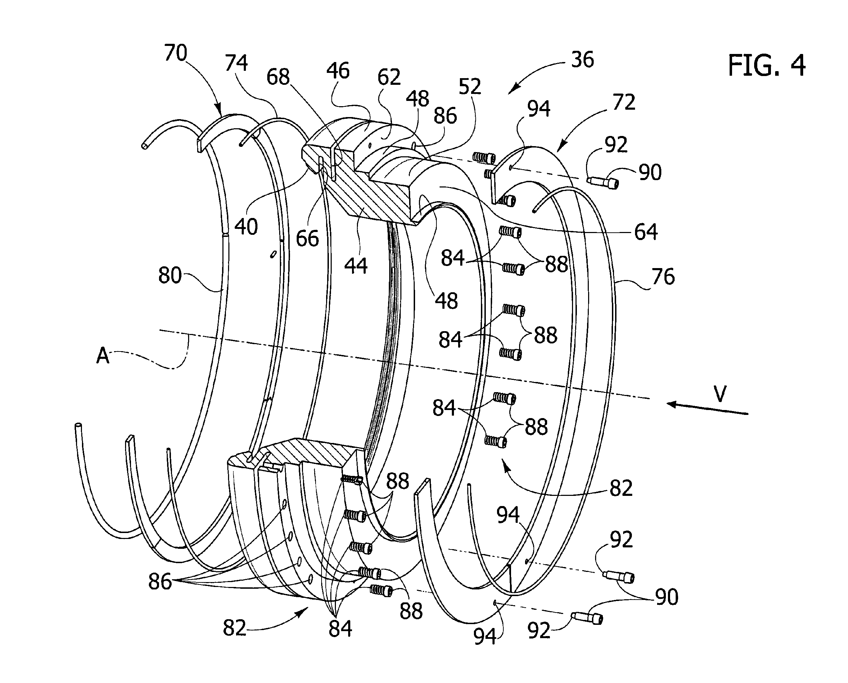

Referring to figures 3 and 4 the first seat ring 36 comprises an integral body made of metallic material and having a guide portion 44 and a head portion 46. The guide portion 44 has cylindrical guide surfaces 48 which slidably engage corresponding guide surfaces of the respective tubular section 16.

A sealing element 50 is mounted on a cylindrical outer surface 52 of the seat ring 36. The sealing element 50 carries two o-rings 54 which establish a sealing contact with the cylindrical outer surface 52 of the seat ring 36 and with a cylindrical inner surface 56 of the tubular section 16. A first and a second series of compression springs 58, 60 are set between radial surfaces 62, 64 of the seat ring 36 and the tubular section 16. The compression springs 58 and 60 bias the seat ring 36 towards the ball 24 and keep the valve seat 40 in contact with the spherical surface of the ball 24. The fluid pressure in the duct 22 increases the force biasing the seat ring 36 against the ball 24.

The valve seat 40 is integrally formed on a surface of the head portion 46. The sealing contact between the seat ring 36 and the ball 24 is therefore metal-to-metal.

The head portion 46 of the seat ring 36 has a first and a second annular groove, 66, 68 directed radially with respect to the longitudinal axis A and spaced apart from each other in the direction of the longitudinal axis A. Each annular groove 66, 68 has a closed end and an open end. The respective open ends of the annular grooves 66, 68 are facing in opposite directions. In the shown embodiment, the first annular groove 66 (the one closer to the valve seat 40) is open at its radially inner end and the second annular groove 68 (the one farthest away from the valve seat 40) is open at its radially outward end.

The radial depth of the annular grooves 66, 68 is such that a line parallel to the longitudinal axis A and passing through the valve seat 40 intersects both annular grooves 66, 68. Each annular groove 66, 68 has two parallel planar radial walls connected to each other at the closed end by a semi-circular annular wall.

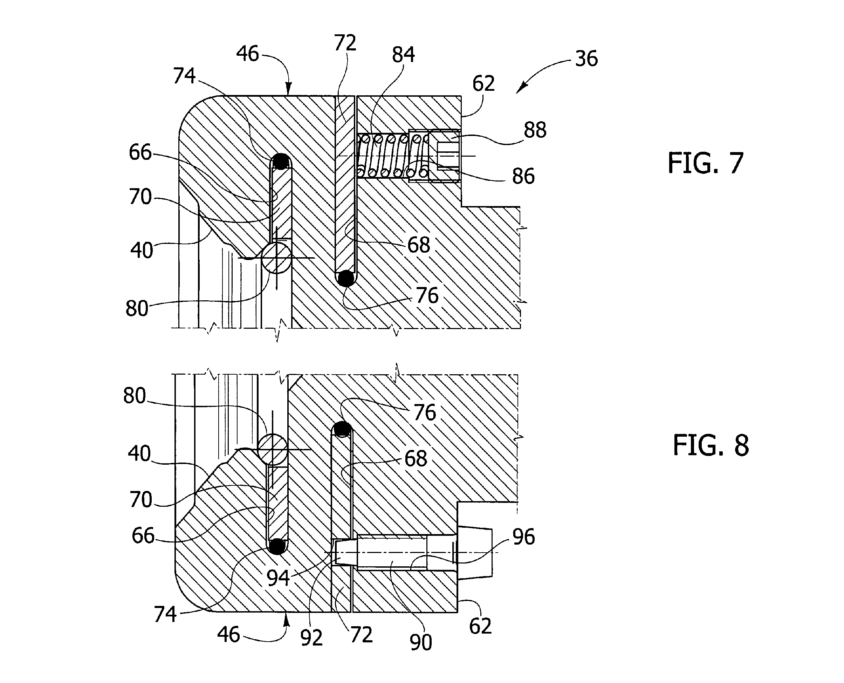

Referring to figures 4 to 8, the seat ring 36 comprises a first and a second backup ring 70, 72 inserted into the respective annular grooves 66, 68. As shown in particular in figures 7 and 8, the backup rings 70, 72 in a radial direction extend substantially for the whole depth of the respective annular grooves 66, 68. The thickness of the backup rings 70, 72 is slightly less than the thickness of the respective annular grooves 66, 68 so that in a longitudinal direction a small play is present between the radial surfaces of the annular grooves 66, 68 and the corresponding radial surfaces of the backup rings 70, 72. Each backup ring 70, 72 is formed by two or more sectors in order to permit assembly of the backup rings 70, 72 into the respective annular grooves 66, 68. Preferably, a first and a second o-ring 74, 76 are interposed between the closed end of each annular groove 66, 68 and the inner end of the respective backup ring 70, 72. A metal retaining ring 80 is preferably mounted in correspondence with the open end of the first annular groove 66.

The seat ring 36 comprises an elastic preloading device 82 arranged to apply between the seat ring 36 and the backup ring 72 elastic forces parallel to the longitudinal axis A. The elastic preloading device 82 comprises a plurality of compression springs 84 inserted into respective holes 86 directed parallel to the longitudinal axis A and open into the annular groove 68. The holes 86 are spaced apart from each other in a circumferential direction. Each compression spring 84, is preferably formed by a helical spring, having a first end directly abutting against the backup ring 72 and a second end abutting against a screw 88 engaging a threaded portion of the respective hole 86.

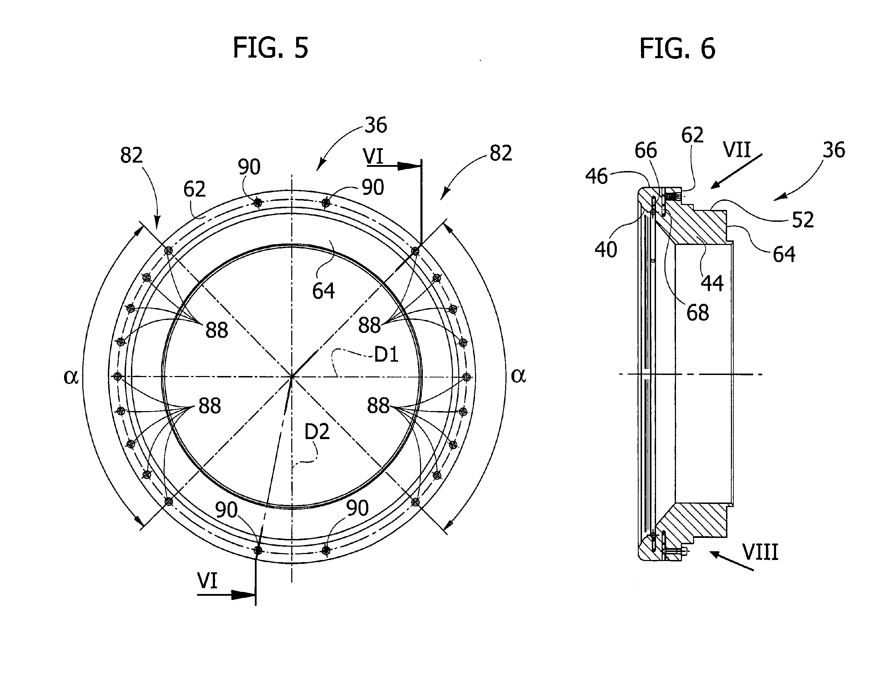

Referring to figure 5, the elastic preloading device 82 acts primarily, and preferably exclusively, in correspondence with two opposite angular sectors α of the backup ring 72, symmetric with respect to a diametric axis D1 of the backup ring 72 orthogonal with respect to the axis of rotation B. The angular extension of each of the two sectors α is preferably comprised between 60° and 90°. The compression springs 84 are equally spaced from each other in angular direction in the two sectors α. The elastic force applied by the springs 84 can be adjusted by screwing or unscrewing the respective screws 88.

Referring to figures 5 and 8, the seat ring 36 comprises a plurality of positioning screws 90 each of which has a tapered end 92 engaging a respective positioning hole 94 of the backup ring 72. The positioning screws 90 are located close to a diametric axis D2 of the backup ring 72 parallel to the axis of rotation B. The positioning screw 90 engages respective threaded holes 96 of the head portion 96 extending parallel to the longitudinal axis A.

Referring to figure 2, the second seat ring 38 can have a simplified structure with respect to the seat ring 36. In the example shown in figure 2, the second seat ring 38 has only one annular groove 66. The second seat ring 38 could also be provided with two annular grooves as in the case of the first seat ring 36 when the preferred direction of seal is unknown.

When the seat ring 36 or 38 is provided with two annular grooves 66, 68 with respective backup rings 70, 72, the elastic preloading device 82 could be associated to only one or to both backup rings 70, 72.

When the valve is subjected to a differential pressure, the side of the ball subjected to the lower pressure is deformed under the action of the force acting on the higher pressure side. When the pressure differential equals the maximum rated pressure of the valve the deformation of the ball on the lower pressure side is substantial. An analysis of the deformation of the ball under differential pressure shows that the larger deformations of the ball are concentrated in two sectors symmetrical with respect to a diameter of the ball orthogonal to the axis of rotation B. The elastic preloading device 82 according to the present invention is designed to increase the contact pressure of the valve seat 40 in the areas of the ball 24 subjected to greater deformations under conditions of differential pressure.

The provision of two annular grooves 66, 68 in the head portion 46 of the seat ring 36 provides a great flexibility of the valve seat 40. The valve seat 40 is therefore able to maintain a sealing contact with the ball when the ball is deformed in conditions of differential pressure. The elastic preloading device 82 improves the contact of the valve seat 40 in the areas of maximum deformations of the ball.

The effect of the present invention is that the valve 10 can ensure the sealing power on both sides of the valve 24 even in the most critical conditions corresponding to a differential pressure equal to the valve's maximum rated pressure.

## Claims

1. A trunnion-mounted ball valve, comprising:
- a valve body (12) including a central body (14) and two opposite tubular sections (16), the central body (14) having a body cavity (20) and the tubular sections (16) having respective ducts (22) with a common longitudinal axis (A) and respective inner ends facing said body cavity,
- a trunnion mounted ball (24) rotatably connected to the valve body (12) and rotatable about an axis of rotation (B) orthogonal to said longitudinal axis (A) between an open position and a closed position, the ball having a through hole (34) which is aligned to said ducts (22) in the open position and transversal to said ducts (22) in the closed position,
- a first and a second seat ring (36, 38) each of which has a guide portion (44) slidably engaging a respective tubular section (16) in the direction of said longitudinal axis (A) and a head portion (46) having a valve seat (40), the valve seats (40) of the first and second seat rings (36, 38) abutting on opposite sides of said ball (24),
**characterised in that** the head portion (46) of at least one of said seat rings (36, 38) has at least one annular groove (66, 68) directed radially with respect to said longitudinal axis (A), wherein a backup ring (70, 72) is housed in said annular groove (66, 68) and is associated to an elastic preloading device arranged to apply between the seat ring (36, 38) and said backup ring (70, 72) elastic forces parallel to said longitudinal axis (A), said elastic preloading device (82) acting in correspondence with two opposite angular sectors (α) of said backup ring (72), each of said angular sectors (α) being symmetric with respect to a diametric axis (D1) of said backup ring (70, 72) orthogonal to said axis of rotation (B).

2. A trunnion-mounted ball valve according to claim 1, **characterised in that** at least one of said seat rings (36, 38) has two annular grooves (66, 68) directed radially to said longitudinal axis (A) and spaced apart from each other in the direction of said longitudinal axis (A), wherein each of said annular grooves (66, 68) has an open end and a closed end, the open ends of said annular grooves (66, 68) facing in opposite directions.

3. A trunnion-mounted ball valve according to claim 2, wherein each of said annular grooves (66, 68) contains a respective backup ring (70, 72).

4. A trunnion-mounted ball valve according to claim 1, **characterised in that** said elastic preloading device (82) comprises a plurality of compression springs (84) housed into respective holes (86) of the head portion (46) of the seat ring (36, 38), said compression springs (84) being spaced apart from each other in a circumferential direction.

5. A trunnion-mounted ball valve according to claim 4, **characterised in that** each compression spring (84) has a first end directly abutting said backup ring (70, 72) and a second end abutting an adjustment screw (88).

6. A trunnion-mounted ball valve according to claim 1, **characterised in that** said seat ring (36, 38) comprises a plurality of positioning screws (90) cooperating with said backup ring (72) for fixing said backup ring (70, 72) in a set position with respect to the head portion (46) of the seat ring (36, 38).

7. A trunnion-mounted ball valve according to claim 1, **characterised in that** each of said angular sectors (α) has an angular extension comprised between 60° and 90°.

8. A trunnion mounted ball valve according to claim 1, **characterised in that** each seat ring (36, 38) establishes a metal-to-metal sealing contact with the ball (24).
